# EUROPÄISCHE PATENTSCHRIFT

(11) **EP 1 818 581 B1**
(45) Veröffentlichungstag und Bekanntmachung des Hinweises auf die Patenterteilung: **13.08.2014**
(21) Anmeldenummer: 06002713.3
(22) Anmeldetag: 10.02.2006
(51) Int. Cl.: F16J 15/32, B21D 53/16

(54) **Verfahren zur Herstellung eines Dichtrings**
Method for making a seal ring
Méthode de fabrication pour un anneau d'étanchéité

(43) Veröffentlichungstag der Anmeldung: 15.08.2007
(73) Patentinhaber: Carl Freudenberg KG, 69469 Weinheim (DE)
(72) Erfinder: Stahl, Hermann, 71711 Steinheim (DE); Schnabel, Norbert, 69518 Abtsteinach (DE)

(56) Entgegenhaltungen:
- EP-A2- 0 262 363
- DE-A- 19 755 391
- US-A- 3 787 960
- US-B1- 6 513 219

## Beschreibung

### Technisches Gebiet

Die Erfindung betrifft ein Verfahren zur Herstellung eines Dichtrings, bei dem aus einem Blech zunächst ein Hohlzylinder gebildet wird, wobei die sich berührenden Kanten des Blechs stoffschlüssig verbunden werden.

### Stand der Technik

Ein derartiges Verfahren ist aus der DE 197 55 391 A1 bekannt. Dabei wird aus einem Blechstreifen zunächst ein Hohlzylinder hergestellt und durch Nachverformen in die Gestalt eines Tragringes übergeführt wird. Die sich berührenden Kanten werden durch Schweißen oder durch Löten stoffschlüssig miteinander verbunden. Das Nachverformen kann durch Rollen oder Tiefziehen erfolgen, wobei der Tragring mit diversen Konturen versehen werden kann. Generell ist bei Tragringen zumindest außenumfangsseitig eine hohe Oberflächengüte erforderlich, da diese Fläche eine statische Dichtfläche bildet, um den Dichtring gegenüber einem Gehäuse abzudichten. Dazu sind eine gute Rundheit und eine geringe Rauheit erforderlich. Bei der Verbindung durch Löten ist nachteilig, dass zum Erreichen einer guten Kapillarwirkung der Abstand der sich berührenden Kanten gering ist und dass die Oberflächen benetzbar sind. Bei einer stoffschlüssigen Verbindung durch Schweißen ergeben sich häufig konkave Einwölbungen an der Verbindungsstelle, die aus einer Materialwanderung resultieren. Aus diesen konkaven Einwölbungen können sich Undichtigkeiten des Dichtrings ergeben.

### Darstellung der Erfindung

Der Erfindung liegt die Aufgabe zugrunde, ein Verfahren zur Herstellung eines Dichtrings zu entwickeln, mittels welchem Dichtringe mit einer hohen statischen Dichtheit und einem geringen Materialbedarf herstellbar sind.

Diese Aufgabe wird mit den Merkmalen von Anspruch 1 gelöst. Auf vorteilhaften Ausgestaltungen nehmen die Unteransprüche Bezug.

Bei dem lösungsgemäßen Verfahren zur Herstellung eines Dichtrings, wird aus einem Blech zunächst ein Hohlzylinder gebildet, wobei die sich berührenden Kanten des Blechs stoffschlüssig verbunden werden, wobei die Verbindung so hergestellt wird, dass sich entlang der sich berührenden Kanten zumindest außenumfangsseitig eine Wulst ergibt, die in einer nachgeschalteten Bearbeitung eingeebnet wird. Eine Wulst ist in einem nachgeschalteten Bearbeitungsschritt einfacher auszugleichen als eine konkave Einwölbung, bei der nachträglich Material eingebracht werden muss. Das Verfahren ist auch vorteilhaft gegenüber dem Widerstandspressschweißen, bei dem die Kanten überlappend angeordnet und miteinander verschweißt werden. Dieses Verfahren führt zu einem ungünstigen Gefüge und einer ungünstigen Oberflächengestalt an der Verbindungsstelle. Beim Widerstandschweißen wird überschüssiges Material neben der Trennstelle aufplattiert und kann sich später lösen. Bei dem erfindungsgemäßen Verfahren ergibt sich eine besonders gute Oberflächengüte und eine gute statische Dichtheit sowie geringe Rundheitsabweichungen. Die Kanten der Trennstelle werden durch beidseitiges zentrisches Beschneiden der gerundeten Zarge exakt hergestellt. Dabei wird an jeder Kante ein Teilstück entfernt, welche bei der Formung des Hohlzylinders aufgrund der Hebelkräfte nicht den gewünschten Radius aufweisen. Dadurch wird auch eine genaue, von keinem Umformvorgang beeinflusste, Abwicklungslänge bei geringen Rundungsabweichungen erreicht. Bei dem erfindungsgemäßen Verfahren können in vorteilhafter Weise vorbehandelte, beispielsweise phosphatierte Bleche eingesetzt werden. Diese Vorbehandlung wird durch das erfindungsgemäße Verfahren, insbesondere auch durch das Laser-Schweißen nur unwesentlich beeinträchtigt. Die Wärmeeinflusszone beim Laser-Schweißen ist klein, so dass die Vorbehandlung nur unwesentlich beeinträchtigt ist. Eine Vorbehandlung der Bleche ist kostengünstiger als eine Vorbehandlung der fertigen Tragringe.

Die Kanten können durch Schweißen miteinander verbunden werden. Schweißen ist ein großserientaugliches Verfahren, welches einen hohen Grad an Automatisierung erlaubt. Es ist kein Vorbehandeln der zu verbindenden Kanten erforderlich.

Die Kanten werden erfindungsgemäß mittels Laserstrahl-Schweißen miteinander verbunden werden. Bei diesem Verfahren erfolgt ein hoher Energieeintrag auf einen geringen Querschnitt und dadurch nur eine kleine Zone aufgeschmolzenen Materials. Es erfolgt nur eine geringe Gefügeveränderung. Das Schweißwerkzeug ist verschleißfrei.

Es kann mit einem Zuschlagsstoff geschweißt werden: Durch Schweißen mit Zuschlagstoff wird ein in der Höhe definierter Wulst, der in einer bevorzugten Ausführung eine Höhe von weniger als 0,1 mm aufweist, hergestellt. Dieser Wulst ist durch Schweißen mit Zuschlagsstoff besonders einfach herstellbar. Das Gefüge der Schweißstelle kann durch Wahl des Zuschlagsstoffes positiv beeinflusst werden.

Vor der nachgeschalteten Bearbeitung können aus dem Hohlzylinder ringförmige Rohlinge abgestochen werden. Dabei wird zunächst ein längerer Hohlzylinder hergestellt werden, aus dem nach dem stoffschlüssigen Verbinden ringförmige Rohlinge abgestochen werden. Dabei reduziert sich die Anzahl der erforderlichen Schweißvorgänge.

Die nachgeschaltete Bearbeitung kann durch Rollen erfolgen, Durch das Rollen werden die durch das Umformen im Gefüge hervorgerufenen Spannungen durch plastisches Umformen reduziert. Es ist eine große Formenvielfalt mit einem Werkzeug erzielbar.

Die nachgeschaltete Bearbeitung kann durch Tiefziehen erfolgen. Tiefziehen ist ein schnelles Verfahren, bei dem in kurzer Zeit hohe Stückzahlen herstellbar sind.

Die nachgeschaltete Bearbeitung kann durch ein spanabhebendes Verfahren erfolgen. Je nach Verfahren kann dabei die Oberflächengüte beeinflusst werden. Des Weiteren können weitere, auch komplizierte, Geometrien in den Außenumfang eingebracht werden. Mögliche spanabhebende Verfahren sind Drehen, Fräsen und Schleifen.

Das Blech kann eine Lochung aufweisen. Dabei kann das Blech ein Lochmuster aufweisen. Dieses ermöglicht eine bessere Verbindung mit Elastomeren die zur Herstellung einer Dichtung auf den Tragring aufgebracht werden. Das Lochmuster kann durch Stanzen oder Lasertrennen in das Blech oder den Blechstreifen eingebracht werden. Hierbei ist vorteilhaft, dass die nachfolgende Bearbeitung das Lochbild nicht beeinträchtigt. Bei der nachgeschalteten Bearbeitung sind die in das Blech eingebrachten Zugspannungen gering, so dass die Bleche mit dem Lochmuster nicht reißen. Durch das Lochmuster verbessert sich die Verbindung mit dem aufzuspritzenden Elastomer. Eine Vorbehandlung des Tragrings, beispielsweise phosphatieren kann dann unter Umständen entfallen. Die Lochung wird vor dem Umformen in das Blech eingebracht und durch die nachgeschaltete Bearbeitung im zylindrischen Bereich nicht beeinträchtigt.

In einer weiteren Lösung der Aufgabe ist ein Tragring für eine Dichtung durch ein Verfahren nach einem der vorherigen Ansprüche erhältlich.

### Kurzbeschreibung der Zeichnungen

Das erfindungsgemäße Verfahren sowie eines erfindungsgemäße Dichtrings werden nachfolgend anhand der Figuren näher erläutert.

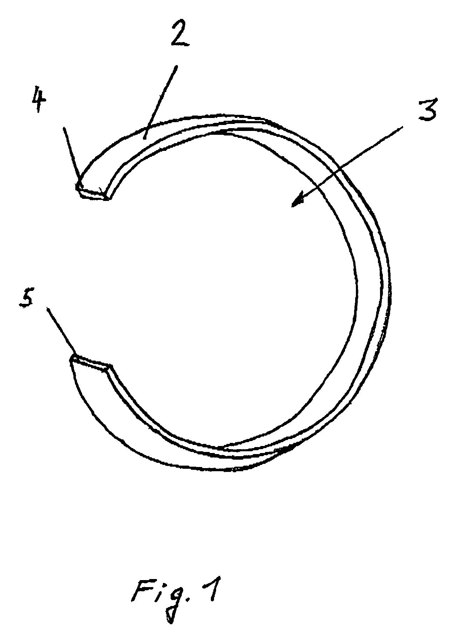

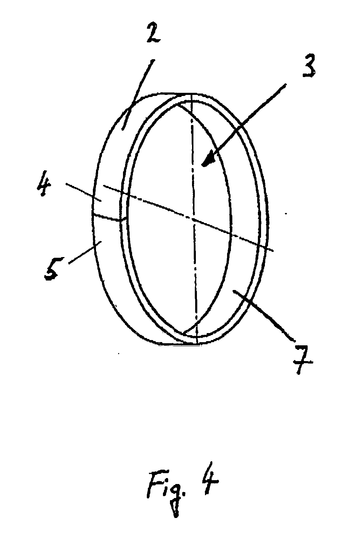

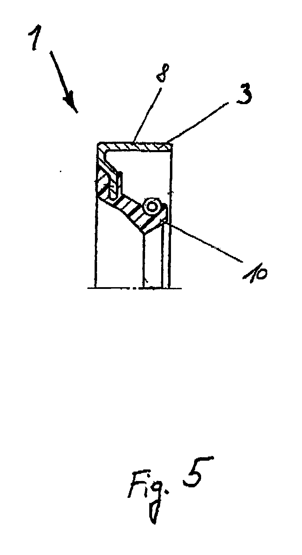

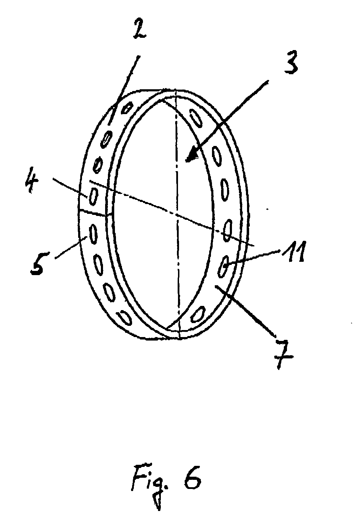

Die Figuren 1 bis 4 zeigen den Herstellungsprozess eines Tragrings einer erfindungsgemäßen Dichtung. Figur 5 zeigt eine erfindungsgemäße Dichtung. Figur 6 zeigt einen Tragring mit einem Lochmuster.

### Ausführung der Erfindung

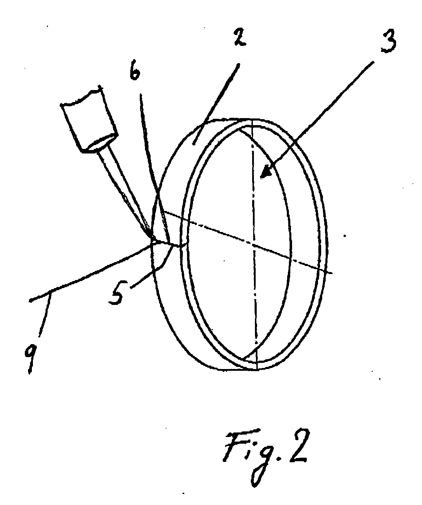

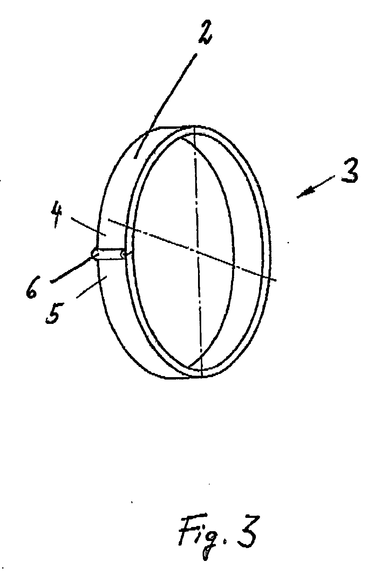

Die Figuren 1 bis 4 zeigen das erfindungsgemäße Verfahren zur Herstellung eines Dichtrings 1. Dabei wird, beispielsweise durch Rollen, zunächst aus einem Blech 2 ein Hohlzylinder 3 gebildet (Figur 1). In einem nächsten Schritt werden die sich berührenden Kanten 4, 5 des zu einem Hohlzylinder 3 geformten Blechs 2 stoffschlüssig miteinander verbunden. Dazu werden die Kanten 4, 5 stumpf aneinander geführt und durch Laserstrahlschweißen und durch Zuführen eines Zuschlagsstoffes 9 stoffschlüssig miteinander verschweißt (Figur 2). Dabei wird die Verbindung so hergestellt, dass sich entlang der sich berührenden Kanten 4, 5 zumindest außenumfangsseitig eine Wulst 6 ergibt (Figur 3). Diese Wulst 6 wird in einer nachgeschalteten Bearbeitung eingeebnet, was hier durch Rollen erfolgt. In anderen Ausführungen kann die nachgeschaltete Bearbeitung durch Tiefziehen oder durch ein spanabhebendes Verfahren, wie beispielsweise Drehen, Fräsen oder Schleifen erfolgen. Zur Reduzierung von Schweißvorgängen können auch zunächst ein Hohlzylinder 3 hergestellt werden, aus dem vor der nachgeschalteten Bearbeitung aus dem Hohlzylinder 3 ringförmige Rohlinge 7 abgestochen werden.

Figur 5 zeigt einen Dichtring 1 mit einem Tragring 8. Der Tragring 8 ist durch einen Hohlzylinder 3 gebildet, der durch das zuvor beschriebene Verfahren hergestellt wurde. An dem Tragring 8 ist eine dynamisch dichtende Dichtlippe 10 anvulkanisiert. Für den Tragring 8 wurde ein Blech 2 verwendet, welches mit einer Phosphatierung vorbehandelt wurde, um die Haftfähigkeit des elastomeren zu verbessern.

Figur 6 zeigt einen Tragring 8, der durch das zuvor beschriebene Verfahren hergestellt wurde. Der Tragring 8 ist mit einem Lochmuster 11 ausgestattet, welches aus einzelnen Löchern besteht, die vor dem Hohlzylinder-Formen gleichmäßig verteilt in das Blech 2 gestanzt wurden.

## Patentansprüche

1. Verfahren zur Herstellung eines Tragrings für einen Dichtring (1), bei dem aus einem Blech (2) zunächst ein Hohlzylinder (3) gebildet wird, wobei die sich berührenden Kanten (4, 5) des Blechs (2) mittels Laserstrahl-Schweißen stoffschlüssig verbunden werden, wobei die Verbindung so hergestellt wird, dass sich entlang der sich berührenden Kanten (4, 5) zumindest außenumfangsseitig eine Wulst (6) ergibt, die in einer nachgeschalteten Bearbeitung eingeebnet wird.

2. Verfahren nach Anspruch 1, **dadurch gekennzeichnet, dass** mit einem Zuschlagsstoff (9) geschweißt wird.

3. Verfahren nach einem der Ansprüche 1 bis 2, **dadurch gekennzeichnet, dass** vor der nachgeschalteten Bearbeitung aus dem Hohlzylinder (3) ringförmige Rohlinge (7) abgestochen werden.

4. Verfahren nach einem der Ansprüche 1 bis 3, **dadurch gekennzeichnet, dass** die nachgeschaltete Bearbeitung durch Rollen erfolgt.

5. Verfahren nach einem der Ansprüche 1 bis 4, **dadurch gekennzeichnet, dass** die nachgeschaltete Bearbeitung durch Tiefziehen erfolgt.

6. Verfahren nach einem der Ansprüche 1 bis 5, **dadurch gekennzeichnet, dass** die nachgeschaltete Bearbeitung durch ein spanabhebendes Verfahren erfolgt.

7. Verfahren nach einem der Ansprüche 1 bis 6, **dadurch gekennzeichnet, dass** das Blech (2) ein Lochmuster (11) aufweist.

8. Tragring (8) für einen Dichtring (1) erhältlich durch ein Verfahren nach einem der vorherigen Ansprüche.

## Claims

1. Method for producing a carrying ring for a sealing ring (1), in which a hollow cylinder (3) is first formed from a metal sheet (2), the touching edges (4, 5) of the metal sheet (2) being connected in a material-bonded manner by means of laser-beam welding, the connection being produced in such a way as to create along the touching edges (4, 5), at least on the outer circumferential side, a bead (6), which is flattened in a subsequent working process.

2. Method according to Claim 1, **characterized in that** welding is performed with a flux (9).

3. Method according to either of Claims 1 and 2, **characterized in that**, before the subsequent working process, annular blanks (7) are cut off from the hollow cylinder (3).

4. Method according to one of Claims 1 to 3, **characterized in that** the downstream working process is performed by rolling.

5. Method according to one of Claims 1 to 4, **characterized in that** the downstream working process is performed by deep drawing.

6. Method according to one of Claims 1 to 5, **characterized in that** the downstream working process is performed by machining.

7. Method according to one of Claims 1 to 6, **characterized in that** the metal sheet (2) has a pattern of holes (11).

8. Carrying ring (8) for a sealing ring (1) that can be obtained by a method according to one of the preceding claims.

## Revendications

1. Procédé de fabrication d'une bague de support pour une bague d'étanchéité (1), dans lequel un cylindre creux (3) est tout d'abord formé à partir d'une tôle (2), les arêtes (4, 5) en contact de la tôle (2) étant assemblées par liaison de matière au moyen d'un soudage à faisceau laser, l'assemblage étant réalisé de telle sorte qu'au moins du côté de la périphérie extérieure un bourrelet (6) soit formé le long des arêtes en contact (4, 5), lequel bourrelet est aplani au cours d'un traitement subséquent.

2. Procédé selon la revendication 1, **caractérisé en ce que** le soudage est réalisé avec une matière de charge (9).

3. procédé selon l'une quelconque des revendications 1 à 2, **caractérisé en ce qu'**avant le traitement subséquent, des pièces brutes (7) de forme annulaire sont découpées dans le cylindre creux (3).

4. Procédé selon l'une quelconque des revendications 1 à 3, **caractérisé en ce que** le traitement subséquent est réalisé par roulage.

5. Procédé selon l'une quelconque des revendications 1 à 4, **caractérisé en ce que** le traitement subséquent est réalisé par emboutissage profond.

6. Procédé selon l'une quelconque des revendications 1 à 5, **caractérisé en ce que** le traitement subséquent est réalisé par un procédé d'usinage par enlèvement de copeaux.

7. Procédé selon l'une quelconque des revendications 1 à 6, **caractérisé en ce que** la tôle (2) présente un motif à trous (11).

8. Bague de support (B) pour une bague d'étanchéité (1) pouvant être obtenue par un procédé selon l'une quelconque des revendications précédentes.
